# EUROPEAN PATENT SPECIFICATION

(11) **EP 3 115 131 B1**
(45) Date of publication and mention of the grant of the patent: **23.01.2019**
(21) Application number: 16176847.8
(22) Date of filing: 29.06.2016
(51) Int. Cl.: B22F 3/105, B22F 5/00, B23K 26/342, B23K 101/00, B33Y 10/00, B33Y 50/02, B33Y 80/00, F23R 3/00

(54) **MANUFACTURE OF COMPONENT WITH COOLING CHANNELS**
HERSTELLUNG EINER KOMPONENTE MIT KÜHLKANÄLEN
FABRICATION DE COMPOSANT AVEC DES CANAUX DE REFROIDISSEMENT

(30) Priority: 06.07.2015 GB 201511776
(43) Date of publication of application: 11.01.2017
(73) Proprietor: Rolls-Royce plc, London SW1E 6AT (GB)
(72) Inventor: Jones, Simon, Derby, Derbyshire DE24 8BJ (GB)
(74) Representative: Rolls-Royce plc

(56) References cited:
- EP-A1- 3 015 648
- EP-A1- 3 081 323
- EP-A2- 2 772 688
- WO-A1-2014/105108
- US-A1- 2007 140 835

## Description

The present disclosure concerns the manufacture of dual wall components which include channels for the passage of cooling fluid. More particularly, the invention relates to a core geometry which facilitates the manufacture of such components using an additive layer manufacturing (ALM) process.
It is known to provide dual wall components using a casting method wherein a core is held in place during the casting process. The dual walls are cast around the core which is subsequently leeched from the cast component leaving a cavity between the walls. The shape of the channels is defined by one or more cores and is limited only by the ability to make a core to the desired shape.
Additive layer manufacturing (ALM) methods are known. In these methods a component is built up layer by layer until the 3D component is defined. In some ALM methods, layers are created by selective treatment of layers within a mass of particulate material, the treatment causing cohesion of selected regions of particulates into a solid mass. For example, the particulate is a ferrous or non-ferrous alloy powder and the treatment involves local heating using a laser or electron beam. Specific examples of such ALM methods include (without limitation); laser sintering, laser melting and electron beam melting (EBM).
Additive layer manufacturing (ALM) techniques are known for use in defining complex geometries to high tolerances and can be used as an alternative to casting. However, such methods are not ideally suited to some conventionally used core geometries.
Cast components which incorporate cooling channels are often used in gas turbine engines to define complex aerodynamic shapes. The casting process and materials used provide materials with very specific mechanical properties which need to be preserved in an environment where they are exposed to extremes of temperature and pressure. As well as serving as cooling channels, hollow cavities provided within these components serve to minimise weight and reduce material costs. The cavities may be connected to external surfaces of the component by a plurality of small cooling holes through which the fluid passes forming a coolant layer which protects the external surfaces.

International application WO 2014/105108 A1 discloses a vascular engineered lattice structure, which may be fabricated by an additive manufacturing process, and a method for producing a component comprising the steps of forming a vascular engineered lattice structure inside of a wall of the component, said vascular engineered lattice structure having at least one of a hollow lattice structure and a solid lattice structure and including at least one inlet hole and at least one outlet hole that communicate a fluid into and out of said vascular engineered lattice structure.
According to a first aspect there is provided a method for the manufacture of a component having an internal cavity, the method comprising;
defining an external geometry of the component,
defining a core geometry of the component;
and characterised by use of an additive layer manufacturing method to build the component from a plurality of layers laid on a first plane such that the core geometry includes a main core passage bordered by a first end wall, a second end wall and elongate walls and divided by one or more dividing walls extending between the elongate walls to form a plurality of cooling passages, the dividing walls and end walls each having a common profile in a direction orthogonal to the first plane and wherein the profile includes an incline of at least 30 degrees to the first plane and the elongate side walls extend orthogonal to the first plane.
The method is well suited to ALM methods where each layer must have some support from an underlying layer if the finished component is to have good structural integrity.
By replacing square angled wall intersections as are commonly used in prior art casting geometries with the inclined walls described, it becomes possible to manufacture a core by an ALM method which has good structural integrity. In ALM methods where the layers extend in parallel to the first plane, the lack of support from an underlying layer can result in mechanically inferior properties. It will be appreciated that, for the purposes of cooling, the proportions and cross sectional shapes of the sub passages defined in the main core passage are of importance to ensure optimum flow of coolant through these passages. Accordingly, the dividing walls of the core geometry of the invention are designed with that in mind.

The incline to the first plane is preferably greater than 45 degrees. In some embodiments, the incline is in the range 45 to 60 degrees. The walls may be planar and extend at a consistent incline to the first plane. In another option, the walls may be non-planar, each end inclining to the first plane in a different direction. For example, the walls may meet at a centre line of the core passage to form a chevron shape. It will be appreciated, however, that the walls need not be symmetrical about a centreline and may incline from the first plane at different angles forming a vertex at a position to one side of the centreline. Walls need not be sharply angled and may, for example, have a curved profile.

Optionally the dividing walls have a thickness of from about 0.5mm to about 2mm.

The first plane can be orthogonal to a longitudinal axis of the main core passage. The first plane can be parallel to a longitudinal axis of the main core passage. In the latter case, opposing walls in parallel with the longitudinal axis may be profiled.

A component may comprise multiple main core passages which may have the same or different internal geometries. Multiple main core passages may be connected by through wall channels.

For example, the component can be manufactured from a ferrous or non-ferrous alloy or a ceramic. The component may be a component for a gas turbine engine. Additional channels may extend from the main core passage and may serve as cooling channels in the finished component. The additional channels may extend from the main core passage through to external surfaces of the components. In some embodiments, the additional channels may pass though dividing walls. Additional channels may be orthogonal to surfaces at which they enter and exit a wall, alternatively they may be inclined to the orthogonal.

The component is a dual walled tile, wherein having elongate side walls running in parallel in a direction substantially orthogonal to the build plane P.
It will be appreciated that by changing the shape of core passage dividing walls as described, it becomes possible to manufacture core cavities using DLD or other additive manufacturing processes. Furthermore, by designing the end walls to have a similar profile to the dividing walls, the same area of cooling channels can be preserved. Furthermore, a part can be manufactured without overhanging walls, which in DLD have been found to introduce very rough surface finishes and cracking.
In another aspect, the invention comprises a gas turbine engine incorporating one or more components manufactured in accordance with the method of the invention.
The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.
Embodiments will now be described by way of example only, with reference to the Figures, in which:
**Figure 1** is a sectional side view of a gas turbine engine which may comprise components made in accordance with the method of the invention;
**Figure 2** is a schematic figure of a component made in accordance with prior known methods;
**Figure 3** shows a first component and the core geometry of the component manufactured in accordance with a method of the invention;
**Figure 4** shows in a second component and the core geometry of the component manufactured in accordance with a method of the invention;

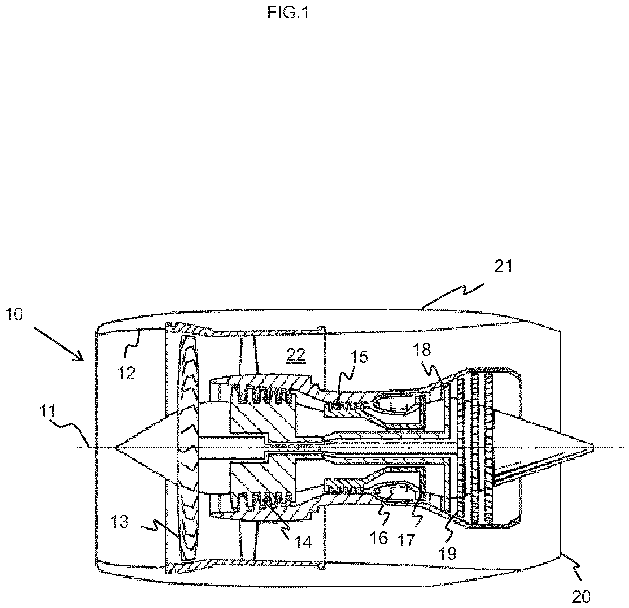

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the airflow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Many components of the gas turbine engine are dual wall components defining internal cooling passages and their internal geometry could be adapted to facilitate their manufacture by the method of the invention. For example (but without limitation), components in the turbine sections 17, 18 and 19, or the combustor 16 may be manufactured in accordance with the invention. The method is well suited to the manufacture of walls and platforms through which cooling air is often distributed to cool components in these sections.

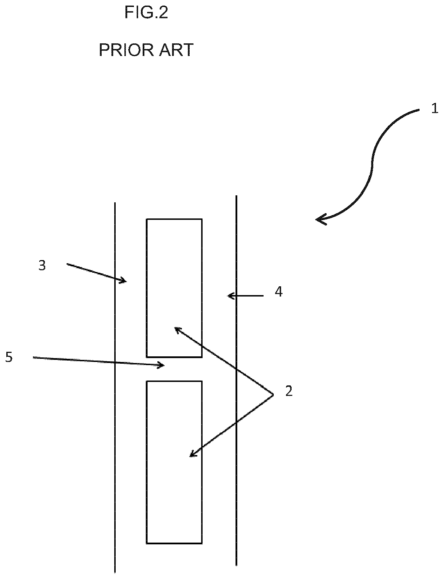

Figure 2 shows an internal geometry of a prior art component 1 comprising cooling channels 2 and manufactured using a casting method. As can be seen, the cooling channels are bounded by elongate walls 3 and 4 of the component and a dividing wall 5. The walls intersect at right angles and extend in a horizontal plane.

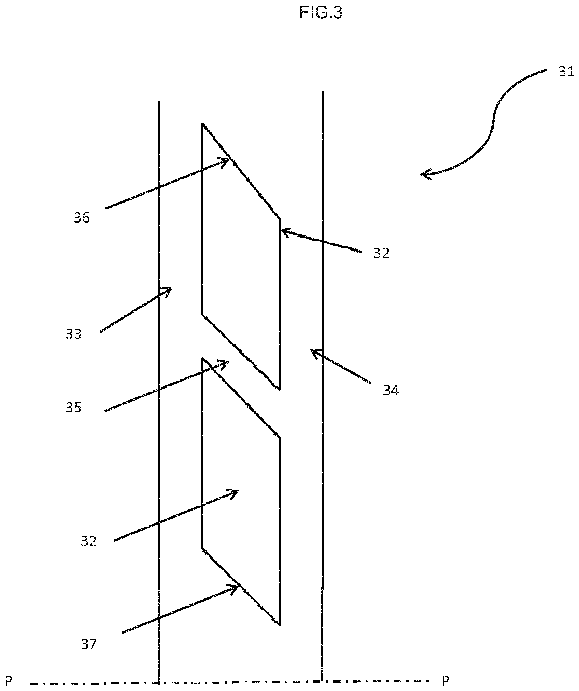

Figure 3 shows an internal geometry of a component 31 manufactured in accordance with a method of the invention. As can be seen, the component has elongate walls 33 and 34 and end walls 36 and 37 which border a main core passage. The passage is divided by dividing wall 35 to form two cooling channels 32. The component is built in layers upwards from a first plane P, the elongate walls 33, 34 extending orthogonal thereto. End walls and dividing wall 35, 36 and 37 extend between elongate walls 33 and 34 and are inclined to the plane P, the incline being at least 30 degrees to said plane P. As the walls are inclined to the plane and all layers are laid parallel to the plane, each laid layer of the inclined walls 35, 36, 37 provides a support on which to build the next layer.

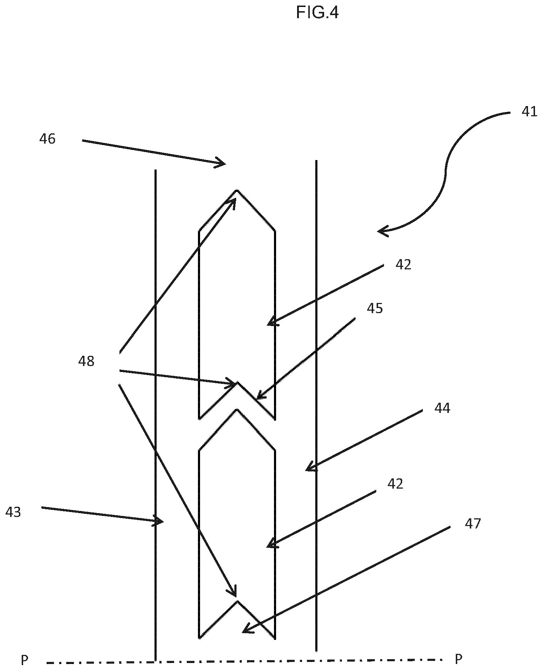

Figure 4 shows an internal geometry of a component 41 manufactured in accordance with a method of the invention. As can be seen, the component has elongate walls 43 and 44 and end walls 46 and 47 which border a main core passage. The passage is divided by dividing wall 45 to form two cooling channels 42. The component is built in layers upwards from a first plane P, the elongate walls 43, 44 extending orthogonal thereto. End walls and dividing wall 45, 46 and 47 extend between elongate walls 43 and 44. As can be seen opposite ends of the walls 45, 46 and 47 are inclined in opposite directions to plane P and meet at a vertex 48 to form a chevron-like arrangement. The dividing wall 45 and the end walls 46, 47 have a common profile in a direction orthogonal to the first plane P and the common profile includes an incline of at least 30 degrees to the first plane P. As the walls are inclined to the plane and all layers are laid parallel to the plane, each laid layer of the inclined walls 35, 36, 37 provides a support on which to build the next layer.

## Claims

1. A method for the manufacture of a component (31; 41) having an internal cavity, the method comprising;
defining an external geometry of the component,
defining a core geometry of the component;
and **characterised by** use of an additive layer manufacturing method to build the component from a plurality of layers laid on a first plane (P) such that the core geometry includes a main core passage bordered by a first end wall (36; 46), a second end wall (37; 47) and elongate walls (33, 34; 43, 44) and divided by one or more dividing walls (35; 45) extending between the elongate walls to form a plurality of cooling passages (32; 42), the dividing walls and end walls each having a common profile in a direction orthogonal to the first plane and wherein the common profile includes an incline of at least 30 degrees to the first plane and the elongate side walls extend orthogonal to the first plane.

2. A method as claimed in claim 1 wherein the incline is greater than 45 degrees.

3. A method as claimed in claim 1 wherein the incline is in the range 45 to 60 degrees.

4. A method as claimed in any preceding claim wherein the end walls and the one or more dividing walls are planar and extend at a consistent incline to the first plane.

5. A method as claimed in any of claims 1 to 3 wherein the end walls and the one or more dividing walls (45, 46, 47) are non-planar, opposite ends of the walls inclining to the first plane in a different direction.

6. A method as claimed in claim 5 wherein the end walls and the one or more dividing walls each converge to a vertex (48) at a centre line of the core passage to form a chevron shape.

7. A method as claimed in claim 5 wherein each end of any given wall of the end walls and the one or more dividing walls inclines to the first plane at a respective angle and the said ends converge to a vertex which is off a centreline of the core passage.

8. A method as claimed in any preceding claim wherein the walls have a thickness in the range 0.5mm to 2mm.

9. A method as claimed in any one of claims 1 to 8 wherein the first plane is orthogonal to a longitudinal axis of the main core passage.

10. A method as claimed in any preceding claim wherein the layers comprise a ferrous or non-ferrous alloy or a ceramic.

11. A method as claimed in any preceding claim further comprising additional channels extending from the main core passage through an external wall of the component.

12. A method as claimed in any preceding claims further comprising additional channels passing through one or more dividing walls.

13. A component manufactured according to the method of any one of the preceding claims and configured for use in a gas turbine engine and wherein the main core passage serves as part of a circuit for distributing coolant to components of the gas turbine engine.

14. A gas turbine engine incorporating one or more components, at least one of the components having the form prescribed in claim 13.

## Patentansprüche

1. Verfahren für die Fertigung einer Komponente (31; 41) mit einem inneren Hohlraum, wobei das Verfahren umfasst;
Definieren einer äußeren Geometrie der Komponente, die eine Kemgeometrie der Komponente definiert;
und durch Einsatz eines Herstellverfahrens für eine Additivschicht gekennzeichnet wird, um die Komponente aus einer Vielzahl von so über eine erste Ebene (P) gelegten Schichten aufzubauen, dass die Kemgeometrie eine durch eine erste Endwand (36; 46) begrenzte Hauptkerndurchführung, eine zweite Endwand (37; 47) und längliche Wände (33, 34; 43, 44) aufweist und durch eine oder mehrere Trennwände (35; 45) unterteilt wird, die sich zwischen den länglichen Wänden erstrecken, um eine Vielzahl von Kühldurchführungen (32; 42) zu bilden, wobei die Trennwände und Endwände jeweils ein gemeinsames Profil in einer zu der ersten Ebene rechtwinkligen Richtung aufweisen und wobei das gemeinsame Profil eine Neigung von mindestens 30 Grad zu der ersten Ebene aufweist und die länglichen Seitenwände sich rechtwinklig zu der ersten Ebene erstrecken.

2. Verfahren nach Anspruch 1, wobei die Neigung größer als 45 Grad ist.

3. Verfahren nach Anspruch 1, wobei die Neigung im Bereich 45 bis 60 Grad ist.

4. Verfahren nach einem vorhergehenden Anspruch, wobei die Endwände und die eine oder mehreren Trennwände eben sind und sich zu der ersten Ebene mit einer gleichbleibenden Neigung erstrecken.

5. Verfahren nach einem der Ansprüche 1 bis 3, wobei die Endwände und die eine oder mehreren Trennwände (45, 46, 47) nicht ebene, gegenüberliegende Enden der Wände sind, die sich zu der ersten Ebene in einer unterschiedlichen Richtung neigen.

6. Verfahren nach Anspruch 5, wobei die Endwände und die eine oder mehreren Trennwände jeweils zu einem Scheitelpunkt (48) an einer Mittellinie der Kemdurchführung zusammenlaufen, um eine Winkelform zu bilden.

7. Verfahren nach Anspruch 5, wobei jedes Ende einer beliebigen Wand der Endwände und der einen oder mehreren Trennwände sich mit einem entsprechenden Winkel zu der ersten Ebene neigt und die Enden zu einem Scheitelpunkt zusammenlaufen, der außerhalb einer Mittellinie der Kerndurchführung liegt.

8. Verfahren nach einem vorhergehenden Anspruch, wobei die Wände eine Dicke im Bereich 0,5 mm bis 2 mm aufweisen.

9. Verfahren nach einem der Ansprüche 1 bis 8, wobei die erste Ebene rechtwinklig zu einer Längsachse der Hauptkemdurchführung ist.

10. Verfahren nach einem vorhergehenden Anspruch, wobei die Schichten eine Eisen- oder Nichteisenlegierung oder eine Keramik umfassen.

11. Verfahren nach einem vorhergehenden Anspruch, das des Weiteren zusätzliche Kanäle umfasst, die sich von der Hauptkemdurchführung durch eine äußere Wand der Komponente erstrecken.

12. Verfahren nach einem vorhergehenden Anspruch, das des Weiteren zusätzliche Kanäle umfasst, die durch eine oder mehrere Trennwände verlaufen.

13. Komponente, die nach dem Verfahren eines der vorhergehenden Ansprüche gefertigt und zur Verwendung in einem Gasturbinenmotor konfiguriert wird, und wobei die Hauptkemdurchführung als Teil eines Kreislaufs zum Verteilen von Kühlmittel an Komponenten des Gasturbinenmotors dient.

14. Gasturbinenmotor, der eine oder mehrere Komponenten vereinigt, wobei mindestens eine der Komponenten die in Anspruch 13 vorgeschriebene Form aufweist.

## Revendications

1. Méthode pour la fabrication d'un composant (31 ; 41) possédant une cavité interne, la méthode comprenant :
la définition d'une géométrie externe du composant,
définissant une géométrie à noyau du composant ;
et **caractérisée par** l'emploi d'une méthode de fabrication d'une couche d'additif pour la constitution du composant à partir d'une pluralité de couches posées sur un premier plan (P), de sorte que la géométrie à noyau comprenne un passage central principal délimité par une première paroi d'extrémité (36 ; 46), une deuxième paroi d'extrémité (37 ; 47), et des parois allongées (33, 34 ; 43, 44), et divisé par une ou plusieurs cloisons (35 ; 45) s'étendant entre les parois allongées en formant une pluralité de passages de refroidissement (32 ; 42), les cloisons et les parois d'extrémité possédant chacune un profil commun dans une direction perpendiculaire au premier plan, et le profil commun comprenant une inclinaison d'au moins 30 degrés relativement au premier plan, et les parois latérales allongées s'étendant perpendiculairement au premier plan.

2. Méthode selon la revendication 1, l'angle d'inclinaison étant supérieur à 45 degrés.

3. Méthode selon la revendication 1, l'angle d'inclinaison étant compris dans la plage allant de 45 à 60 degrés.

4. Méthode selon une quelconque des revendications précédentes, les parois d'extrémité et l'une ou plusieurs cloisons étant planes, et s'étendant à un angle d'inclinaison homogène relativement au premier plan.

5. Méthode selon une quelconque des revendications 1 à 3, les parois d'extrémité et l'une ou plusieurs cloisons (45, 46, 47) étant non planes, les extrémités opposées des parois étant inclinées relativement au premier plan dans une direction différente.

6. Méthode selon la revendication 5, les parois d'extrémité et l'une ou plusieurs cloisons convergeant chacune vers un sommet (48) à un axe du passage central pour former une forme en chevron.

7. Méthode selon la revendication 5, chaque bout d'une paroi donnée des parois d'extrémité et de l'une ou plusieurs cloisons étant incliné par rapport au premier plan à un angle respectif, et lesdits bouts convergeant vers un sommet décentré par rapport à l'axe du passage central.

8. Méthode selon une quelconque des revendications précédentes, l'épaisseur des parois étant comprise dans la plage 0,5 mm à 2 mm.

9. Méthode selon une quelconque des revendications 1 à 8, le premier plan étant perpendiculaire à un axe longitudinal du passage central principal.

10. Méthode selon une quelconque des revendications précédentes, les couches comprenant un alliage ferreux ou non ferreux, ou une céramique.

11. Méthode selon une quelconque des revendications précédentes, comprenant des canaux additionnels s'étendant depuis le passage central principal à travers une paroi externe du composant.

12. Méthode selon une quelconque des revendications précédentes, comprenant en outre des canaux additionnels traversant l'une ou plusieurs cloisons.

13. Composant fabriqué selon la méthode d'une quelconque des revendications précédentes, et configuré pour être utilisé dans un moteur à turbine à gaz, et le passage central principal servant, dans le cadre d'un circuit, à la distribution de réfrigérant à des composants du moteur à turbine à gaz.

14. Moteur à turbine a gaz incorporant un ou plusieurs composants, au moins un des composants ayant la forme spécifiée à la revendication 13.
